Europäisches Patentamt

European Patent Office

Office européen des brevets

(19)

(11) **EP 0 992 186 B1**

(12) **FASCICULE DE BREVET EUROPEEN**

(45) Date de publication et mention
de la délivrance du brevet:
**09.04.2003 Bulletin 2003/15**

(51) Int Cl.⁷: **A01B 79/00**

(21) Numéro de dépôt: **99430021.8**

(22) Date de dépôt: **22.09.1999**

(54) **Procédé d'exploitation de données agricoles localisées pour optimiser la culture des plantes pérennes**

Benutzungsverfahren von landwirtschaftlichen standortdaten zur kultivationsoptimierung von überjärigen pflanzen

Proces using agricultural location data for optimisation of perennial plant cultivation

(84) Etats contractants désignés:
**AT BE CH CY DE DK ES FI FR GB GR IE IT LI LU
MC NL PT SE**

(30) Priorité: **29.09.1998 FR 9812405**

(43) Date de publication de la demande:
**12.04.2000 Bulletin 2000/15**

(73) Titulaire: **PELLENC (Société Anonyme)
84120 Pertuis (FR)**

(72) Inventeurs:
• **Pellenc, Roger
84120 Pertuis (FR)**
• **Bourely, Antoine
84240 La Tour d'Aigues (FR)**

(74) Mandataire: **Marek, Pierre
Cabinet Marek,
28 & 32, rue de la Loge
13002 Marseille (FR)**

(56) Documents cités:
**EP-A- 0 282 639        EP-A- 0 730 819
DE-A- 19 530 356        DE-C- 19 642 439**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

La présente invention concerne un procédé d'exploitation de données agricoles localisées pour optimiser la culture des plantes pérennes.

**1. Etat de la technique.**

On connaît la notion d'Agriculture de Précision, qui s'est largement répandue depuis une dizaine d'années dans le contexte des grandes cultures annuelles (surtout céréales). Ce nouveau concept est né de la rencontre de deux types de capteurs dont la précision s'est avérée suffisante : la localisation absolue type GPS, et les capteurs de rendement embarqués.

*1.1 La localisation absolue :*

Le GPS (Global Positioning System) est un système de positionnement par satellites.

Son principe est le suivant : le ministère de la défense américain possède un ensemble de 24 satellites en orbite autour de la Terre; ces satellites émettent, en direction de la Terre, des ondes radios indiquant l'heure et leur position dans l'espace. Sur Terre, chaque récepteur GPS reçoit, à tout instant, les ondes d'au moins quatre de ces satellites : ceux qui, à un instant t, sont visibles pour lui, c'est-à-dire non cachés par le Globe terrestre ; à partir du temps de vol de l'onde entre émetteur et récepteur, le récepteur calcule sa distance par rapport à chaque satellite visible ; ainsi, s'il capte les signaux d'au moins quatre satellites, le récepteur peut calculer sa position dans l'espace, c'est-à-dire sa latitude, sa longitude, et son altitude.

La précision de ce calcul est de 30 à 100 m, avec un GPS simple (« naturel »). Pour améliorer cette précision, on utilise des GPS en mode différentiel (DGPS): à l'aide de récepteurs GPS fixes de positions connues, on calcule les erreurs de positionnement que transmettent les signaux satellitaires et on corrige, à l'aide de ces calculs, les valeurs obtenues par des GPS naturels. La précision atteint alors 1 m environ.

Pour l'Agriculture de Précision, le DGPS est la solution adoptée par la plupart des constructeurs de machines pour la récolte ou les traitements des céréales.

*1.2 Capteurs de rendement*

**Mesure de poids** : Plusieurs principes de mesure de rendement existent pour les céréales, mais ils ne sont pas adaptés à la vendange ou à des produits humides. Cette donnée de rendement doit être corrigée de l'humidité du grain, que l'on sait également mesurer.

Ces principes ne fonctionnent que sur un produit granuleux et très largement sec (près de 90 % de matière sèche). Un produit humide à plus de 80 % comme la vendange, collant, avec une proportion de jus importante, ne peut pas être mesuré avec de tels procédés.

C'est pour cela que la demanderesse a développé un système de pesage spécifique, faisant l'objet d'une demande de brevet déposée le 04/09/98, (98942829.7) sous le titre "Dispositif et procédé de pesage embarqué et en continu de récolte, et machines de récolte en faisant application".

*1.3 Les systèmes de cartographie :*

Les objectifs d'un système de cartographie sont multiples : ils visent tous à aider l'agriculteur dans la conduite de ses cultures sur un cycle pluri-annuel, grâce à :

•   Une information sur les potentialités des différentes zones de la parcelle ;

•   une orientation pour l'acquisition d'autres paramètres (exemple : positionnement des prélèvements de sol) ;

•   une orientation des futures actions culturales (notion de « préconisation ») ;

•   un jugement des résultats obtenus à l'aide de la conduite modulée de ces cultures.

La structure d'un système de cartographie est connue (voir par exemple le document WO 98/21928 A) ; elle comprend, en tout ou en partie, les composants suivants :

•   un capteur embarqué de localisation absolue, de type DGPS ;

•   un capteur embarqué de saisie en temps réel du rendement (ou d'une autre donnée) ;

•   un ordinateur et un logiciel embarqués de saisie, synchronisant les deux informations précédentes ;

•   un logiciel de cartographie, pour représenter les données relevées dans la parcelle ; ce logiciel est soit embarqué, soit disponible sur un ordinateur à l'exploitation ;

•   un logiciel d'aide à l'établissement de cartes de préconisation pour les actions culturales ultérieures, généralement sur l'ordinateur de l'exploitation.

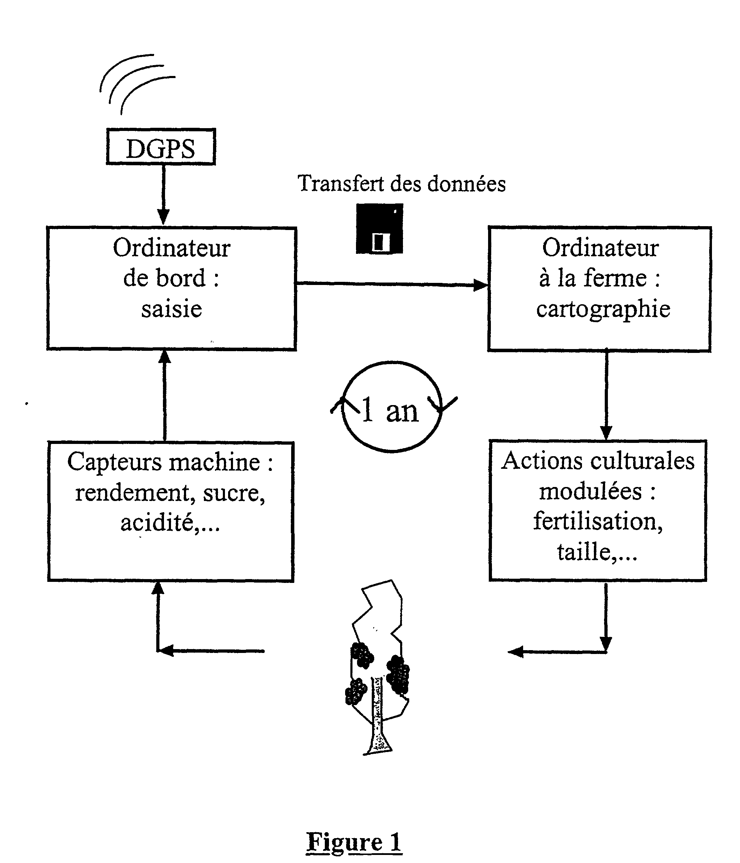

La figure 1 est un synoptique d'un système de cartographie, valable aussi bien dans le cas général que dans le cadre de la présente invention.

Dans le logiciel de cartographie, on représente chaque parcelle par une carte à deux dimensions (latitude et longitude), sur laquelle les différentes gammes de valeurs sont représentées de façon spécifique : on peut par exemple attribuer à chaque gamme une couleur spécifique, ou un type de hachures spécifique.

Par ailleurs, les préconisations portent sur deux opérations culturales essentiellement, la fertilisation et la pulvérisation :

- **fertilisation :** il s'agit d'apporter aux plantes, sous forme d'engrais, des nutriments dont elles manquent, essentiellement l'azote.

- **pulvérisation (protection phytosanitaire) :** il s'agit d'épandre des produits pour tuer les microorganismes ou les insectes susceptibles d'attaquer les cultures, ou les mauvaises herbes susceptibles de les concurrencer. L'opération est à répéter dès qu'une pluie a lessivé les produits précédents.

Pour ces opérations, l'enjeu est d'optimiser les quantités à épandre, pour économiser des produits chers, et aussi pour éviter que les produits non consommés ne polluent les nappes phréatiques.

On peut noter des limitations de ces systèmes, liées aux cultures concernées:

Les logiciels de cartographie connus représentent la parcelle comme une surface continue, et filtrent les données de façon identique dans les deux dimensions horizontales, de façon à faire apparaître des zones homogènes. On ne connaît pas à l'heure actuelle de système de cartographie intra-parcellaire adapté à la vigne ou aux arbres fruitiers, faisant usage de la structure de rangs et visualisant les espaces vides entre rangs.

Les logiciels de préconisation gèrent des modulations à grande échelle, avec des mailles typiquement de 20 m x 20 m. Ces échelles correspondent à la nature de ces opérations culturales, qu'il n'y a pas objet à localiser de façon précise. On ne connaît pas de modulation de ces opérations à la plante près.

Enfin, la précision de localisation est limitée par la précision brute du capteur DGPS, sans possibilité de l'améliorer en s'appuyant sur les autres points du parcours. Les parcours de la machine dans le champ étant libres, il n'existe pas de loi permettant de lier les points entre eux de façon précise. Par exemple, la rectitude d'un trajet, ou le parallélisme entre deux passages successifs ne sont que très grossiers.

## 2. Descriptif de l'invention

### 2.1 Objectif

La présente invention s'adresse aux exploitants cultivant des plantes pérennes (notamment viticulteurs et arboriculteurs), et elle s'inscrit dans le cadre général des efforts pour optimiser la qualité des produits, ce qui est une des préoccupations majeures de ces exploitants.

Pour participer à l'optimisation de la qualité, on transpose pour ces cultures les outils d'Agriculture de Précision. Cela nécessite des outils spécifiques de mesure des rendements.

- Pour la viticulture, un tel outil existe, grâce à l'invention, par la demanderesse, d'un dispositif de pesage de vendange.

- Pour l'arboriculture, la notion de capteurs de rendement n'aura de sens que lorsque on aura automatisé la récolte des fruits. Dans le cadre d'une récolte robotisée des fruits, (pour laquelle la Demanderesse a également créé des machines faisant appel à l'intelligence artificielle), où chaque fruit est cueilli individuellement et son calibre est reconnu, il est clair que les rendements de récolte sont faciles à établir à partir des ordinateurs de bord.

Cependant, même avec l'utilisation de capteurs de rendement, la simple transposition des concepts connus d'Agriculture de Précision aux plantes pérennes rendrait trop peu de services utiles. En effet :

- la modulation dans l'espace des opérations de fertilisation et de pulvérisation présente un intérêt nettement plus réduit qu'en grandes cultures. Par exemple, les apports d'azote ne constituent que le tiers des quantités appliquées aux céréales.

- Pour les autres opérations culturales, qui nécessitent la localisation à la plante près, notamment la taille d'hiver, la précision disponible avec le capteur DGPS risque d'être insuffisante.

- La représentation des données selon des surfaces continues n'est pas adaptée aux structures en rangs des plantes pérennes.

- Lorsque l'objectif principal est la qualité, et non le rendement, il est indispensable de relever, en plus des rendements, des données représentatives de la qualité, en particulier lors des opérations de récolte. Il peut s'agir par exemple du taux de sucre, de l'acidité, de l'aspect de la vendange déterminé par vision artificielle (présence de corps étrangers, pourriture, etc...), de la taille et de la couleur des baies, déterminés aussi par vision artificielle.

La présente invention a pour but de remédier à ces limitations, et de fournir aux exploitants un "outil" complet d'Agriculture de Précision, permettant de moduler à la plante près la culture des plantes pérennes.

### 2.2 Objet de l'invention

Le procédé d'exploitation de données agricoles localisées pour optimiser la culture des plantes pérennes selon l'invention est caractérisé en ce qu'il comprend les étapes suivantes :

■ parcours d'une parcelle de plantes pérennes par un véhicule, ou par un piéton, avec production automatique de signaux de localisation en plusieurs points de la parcelle, au moyen d'un capteur de localisation absolue donnant la longitude, la latitude, et l'altitude, par exemple de type GPS différentiel, ce capteur étant embarqué sur ledit véhicule ou transporté par le piéton ;

■ mesure automatique au moyen de capteurs appropriés d'une ou plusieurs données agricoles en chacun de ces points, ces capteurs étant également embarqués sur ledit véhicule ou transportés par le piéton ;

■ enregistrement des signaux de localisation et desdites données mesurées en ces points par une unité de traitement d'information, embarquée sur ledit véhicule ou transportée par le piéton ;

■ traitement des signaux de localisation au moyen d'un ordinateur et d'un algorithme adapté pour améliorer la précision de localisation en exploitant la structure fixe des rangs de la parcelle, de façon à retrouver sans ambiguïté le même rang lors de différents parcours ;

■ représentation, en temps réel ou différé, des positions parcourues et/ou desdites données agricoles sous forme d'une carte élaborée par ordinateur.

Selon une autre disposition caractéristique de l'invention, un algorithme de traitement adapté localise non seulement chaque rang, mais aussi chaque pied des plantes pérennes sur le rang, par le calcul de la distance parcourue depuis une extrémité du rang, et associe audit pied, la ou les donnée(s) enregistrée(s) lors de parcours successifs, ces parcours pouvant être associés à des actions culturales différentes ou effectués au cours d'années différentes.

Le procédé de l'invention procure notamment les avantages ci-après :

■ amélioration de la précision de localisation par rapport à la précision brute du capteur de localisation absolue, grâce à l'algorithme exploitant la structure en rangs fixes.

■ suppression de tout dispositif ou opération d'arpentage préalable pour caractériser la parcelle. De tels systèmes existent avec de grandes précisions, mais à des coûts beaucoup plus élevés.

■ amélioration de la lisibilité des cartes en visualisant les rangs individuels et/ou les plantes individuelles sur ces rangs.

■ repérage simple des plantes individuelles, chacune étant caractérisée par un numéro de rang, et un numéro de plante sur le rang.

■ modulation des opérations culturales à la plante près si besoin est.

Selon une autre disposition caractéristique de l'invention appliquée à la vigne et à la vendange, on enregistre, en temps réel et pour chaque point de mesure, au moins deux types de données, l'une quantitative, liée au rendement de la récolte, l'autre qualitative, par exemple le taux de sucre, ou l'acidité.

Les buts, caractéristiques et avantages ci-dessus, et d'autres encore, ressortiront mieux de la description qui suit et des figures des dessins annexés :

La figure 1 est un synoptique de principe montrant le cycle d'amélioration des actions culturales rendu possible par l'Agriculture de Précision. Dans son principe, il est très général, mais certains éléments sont spécifiques aux plantes pérennes : notamment la mesure du taux de sucre et de l'acidité, et la modulation de la taille.

Les figures 2a et 2b sont des vues schématiques illustrant la notion de rang.

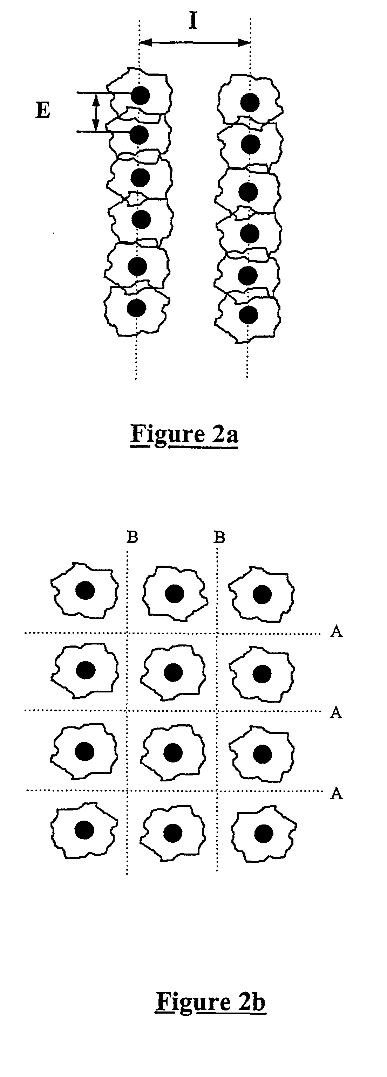

La figure 2a montre une vraie structure de rangs, dans le cas type d'une vigne. On voit que les plantes sont au contact selon l'axe vertical et que toute circulation dans le sens horizontal est impossible. Cette structure est caractérisée par deux paramètres, l'interrang référencé I, et l'espacement sur le rang, référencé E, qui est nettement inférieur à I.

La figure 2b montre une structure ordonnée, mais sans rangs. Le cas type est celui d'une plantation d'oliviers, telle qu'on les trouve en Andalousie. La maille de plantation est carrée, généralement de 10 m x 10 m, et les axes de circulation sont indifféremment les axes A horizontaux, ou les axes B verticaux.

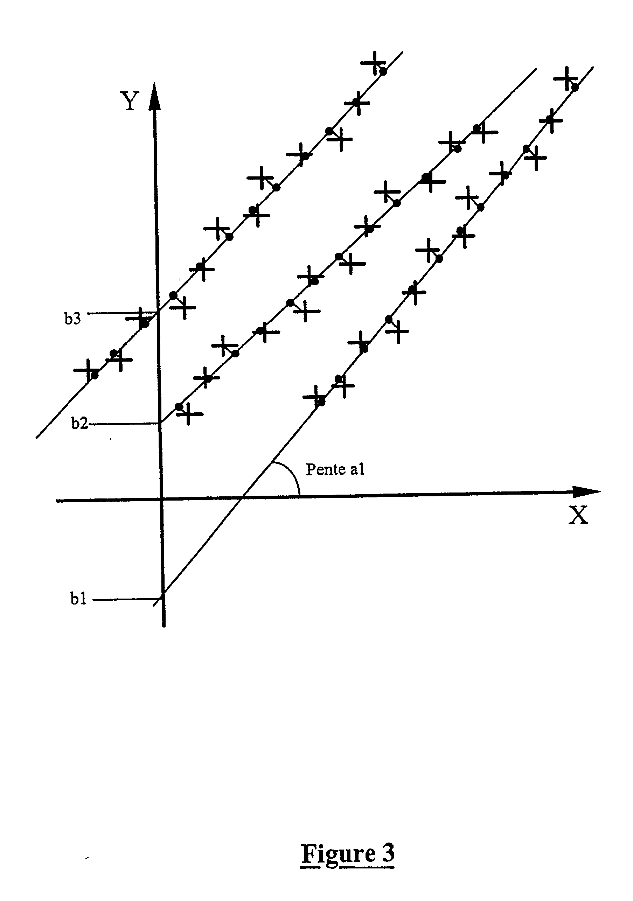

La figure 3 illustre schématiquement la projection des points de mesures bruts, figurés par des croix, sur les points marqués par des ronds situés sur l'axe d'inertie des rangs individuels. Trois rangs sont représentés, caractérisés par les pentes a1, a2, a3 (seul a1 est montré pour plus de clarté), et des ordonnées à l'origine b1, b2 et b3.

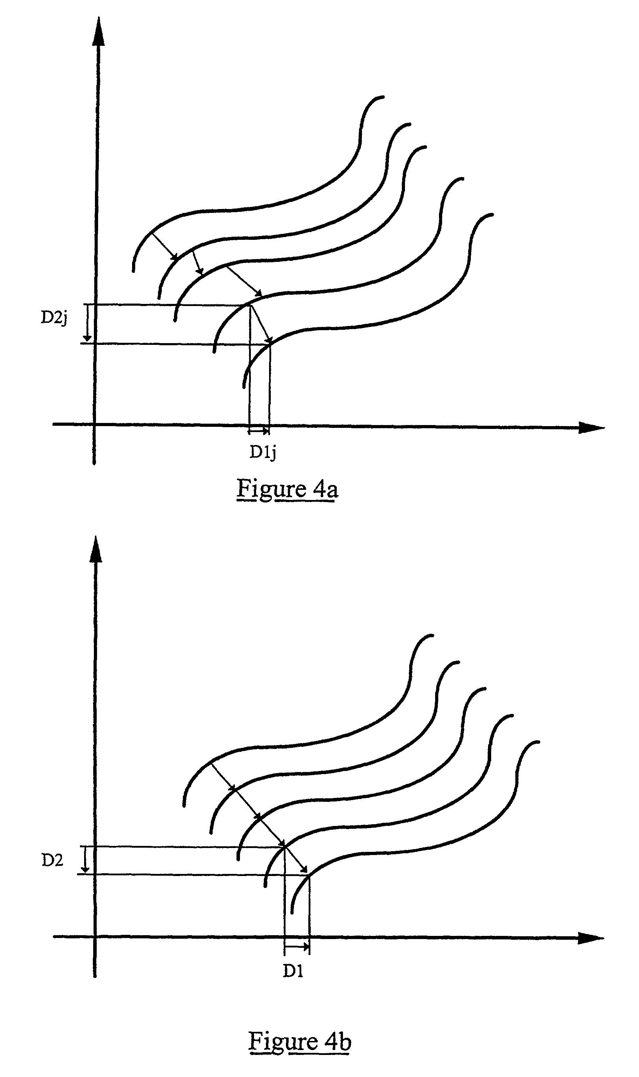

Les figures 4a et 4b illustrent schématiquement le cas particulier de rangs parallèles non rectilignes.

Sur la figure 4a, les rangs sont parallèles et d'espacement irrégulier. L'espacement entre deux rangs successifs est caractérisé par un vecteur de translation (D1, D2), différent pour chaque rang.

Sur la figure 4b, les rangs sont parallèles et d'espacement régulier. L'espacement entre deux rangs successifs est caractérisé par un vecteur de translation (D1, D2), identique pour tous les rangs.

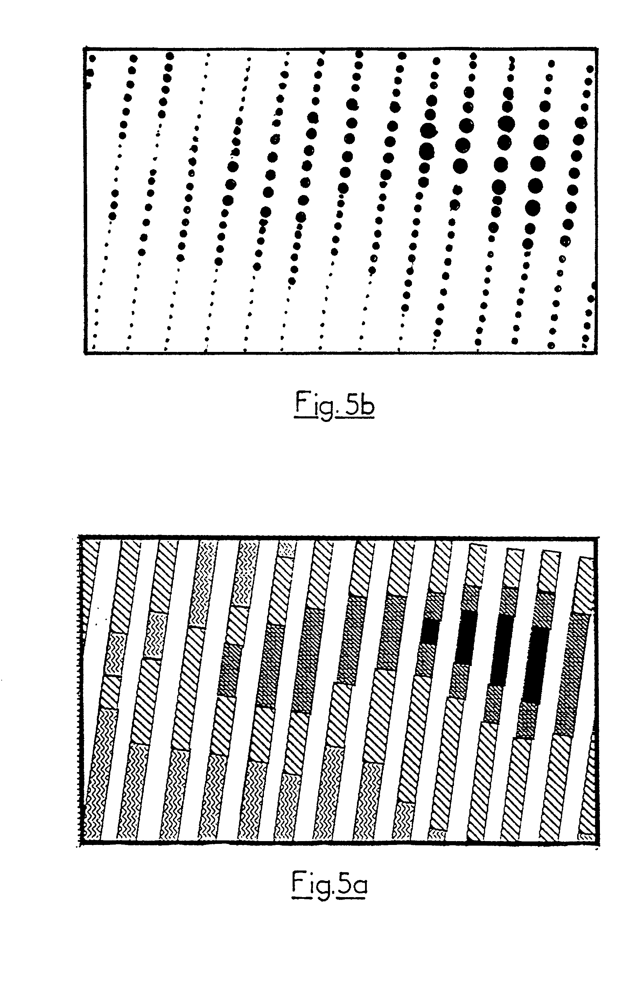

Les figures 5a et 5b sont des exemples de cartes de rendement représentant les espaces vides entre rangs.

Sur la figure 5a, les surfaces élémentaires représentant chaque gamme de valeur, chacune figurée par un type de hachure, sont des rectangles orientés suivant l'axe des rangs.

Sur la figure 5b, chaque symbole représente une seule plante individuelle, cette représentation n'étant adaptée qu'aux petites échelles.

### 2.3 Notion de rang et détection des rangs :

Vu l'importance de la notion de rang dans l'invention, il convient de bien la caractériser.

On considère qu'une plantation de plantes pérennes est structurée en rangs quand la densité des plantes suivant une direction est suffisamment élevée pour interdire la circulation des machines agricoles suivant la direction perpendiculaire. La circulation de toutes les machines se fait alors selon des itinéraires imposés, soit au dessus du rang (système enjambeur), soit entre deux rangs adjacents (système inter-rang). Les piétons, eux, se déplacent toujours dans les inter-rangs. Il s'agit souvent de plantations à maille rectangulaire, avec un inter-rang (distance euclidienne entre axes des rangs) suffisant pour le passage d'une machine (de l'ordre de 2,5 à 4 m), et un espacement des plantes sur le rang (de l'ordre de 1 à 2 m).

Avec cette définition, les vignes en gobelets, même non palissées, sont structurées en rangs, alors que les oliviers d'Andalousie, plantés selon une maille carrée de 10 m de côté, ne sont pas structurés en rangs. Pour plus de clarté, ces deux exemples significatifs sont schématisés sur la figure 2.

Même pour des plantes pérennes non structurées en rangs (figure 2b), on peut les gérer comme des plantes en rangs, à condition de toujours circuler selon les mêmes axes de circulation (par exemple les axes verticaux sur la figure).

On notera que les parcours des machines sont plus répétitifs dans le cas de systèmes enjambeurs, dont la tolérance de positionnement en travers du rang est typiquement inférieure à +/- 10 cm, alors qu'elle est de +/- 20 à 30 cm pour les systèmes inter-rangs.

La première étape de tous les algorithmes qui suivent est de découper le parcours de la machine en rangs distincts. Selon une autre disposition caractéristique de l'invention, on détecte et enregistre les débuts et les fins de rangs, au moyen d'un capteur approprié ou d'une saisie manuelle d'information. L'entrée et la sortie du rang peuvent être caractérisées par l'une des conditions suivantes :

- mise en marche ou arrêt des organes actifs de la machine (secouage pour une vendangeuse, épandage pour la fertilisation, etc...) ;

- détection de la végétation (bois ou feuilles) ou de son absence, à distance, par un capteur approprié, par exemple à ultra-sons ;

- détection d'une balise fixe implantée en bout de rang : piquet de hauteur approprié, plaque à code barre, fil métallique enterré en travers des rangs, etc...

On obtient ainsi une première liste de rangs dans l'ordre où ils sont parcourus par la machine.

### 2.4 Algorithme de recalage

Pour améliorer la précision de la localisation absolue, et limiter l'influence des perturbations aléatoires, un logiciel de correction dit de recalage a été réalisé et validé: on s'appuie sur la connaissance de la structure en rangs pour minimiser les erreurs.

Dans ce qui suit, seules les grandes lignes des algorithmes sont présentées. Le détail des calculs et la gestion des cas particuliers sont évidents pour l'homme de l'art. Ceux des détails de mise en oeuvre qui sont indiqués ne sont nullement limitatifs, car il y a souvent plusieurs solutions possibles.

Dans un premier exemple de mise en oeuvre très intéressant, la précision des données de localisation est améliorée par l'utilisation d'un algorithme de correction exploitant le caractère rectiligne des rangs. Pour cela, on s'appuie sur la structure rectiligne de chaque rang, indépendamment de ses voisins (voir figure 3). En effet, la très grande majorité des rangs de plantes pérennes est rectiligne, surtout depuis que la plantation au laser est généralisée. La précision d'alignement est de l'ordre de +/- 2 cm.

Chacun des points du nuage des points constituant un rang est remplacé par sa projection orthogonale sur la droite constituant l'axe d'inertie du nuage. Cet axe d'inertie est obtenu par l'algorithme connu en soi dit de « régression linéaire ». Cet axe a, dans le cas général, une équation de la forme:

$$Y = a_j \cdot X + b_j$$

où **$a_j$** est la pente, et **$b_j$** est l'ordonnée à l'origine.

Dans cette première version, on notera que les valeurs **$a_j$** et **$b_j$** sont spécifiques du rang **j**, et sans lien entre elles. Cela se traduit par des droites non parallèles, et d'espacements irréguliers, comme illustré en figure 3.

Cette première version permet déjà de réduire la plus grande partie des erreurs perpendiculaires à l'axe de chaque rang. En effet, la meilleure estimation de l'axe du rang est de le confondre avec l'axe d'inertie du nuage, qui est déterminé par la totalité des **$N_j$** points de mesure du rang **j**. L'erreur commise sur la position de chaque rang est alors divisée par $\Sigma N_j$, par rapport à une seule mesure. Par contre, pour chaque point du rang, la composante de l'erreur de positionnement le long du rang n'est pas corrigée.

Selon une autre disposition caractéristique de l'invention, la précision des données de localisation est améliorée par l'utilisation d'un algorithme de correction exploitant le parallélisme des rangs, rectilignes ou non, comme on l'explique ci-après.

Dans un deuxième exemple de mise en oeuvre, on exploite le **parallélisme** des rangs entre eux, en les supposant toujours **rectilignes**. Là encore, la très grande majorité des plantations respecte ce parallélisme avec une très bonne précision. On effectue pour cela une régression linéaire sur tous les rangs simultanément, en imposant une même pente à tous. Pour ce faire, il suffit de trouver les valeurs (a, b1, b2, .., bn) qui minimisent l'expression d'erreur :

$$E^2 = \Sigma_{ij} \, [Y(i,j) - a \cdot X(i,j) - bj]^2,$$

pour tous les points de mesures de numéro i situés sur le rang j.

Les valeurs de **a** et des **bj** sont obtenues sans difficulté en écrivant que la dérivée de $E^2$ par rapport à chacun d'eux est nulle, et en résolvant le système d'équations linéaires obtenu.

La précision obtenue sur la pente a est bien meilleure que dans l'exemple précédent, puisqu'elle est déterminée par la totalité des points de la parcelle (Somme des **Nj**), et non d'un seul rang. Par contre, la précision sur les ordonnées à l'origine est du même ordre.

Dans un troisième exemple de réalisation, l'algorithme de recalage est calculé pour exploiter non seulement le parallélisme des rangs, mais aussi une caractéristique encore très fréquente de ces derniers, leur **espacement régulier.** On impose maintenant aux **bj** d'être en progression arithmétique les uns par rapport aux autres, c'est à dire de suivre une loi de la forme :

$$bj = b_0 + d.j$$

On recherche alors le triplet **(a,b₀, d)** de la même manière que précédemment, et l'expression à minimiser devient :

$$E^2 = \Sigma_{ij}[Y(i,j) - a \cdot X(i,j) - b_0 - d. \, j]^2,$$

pour tous les points de mesure de numéro **i** situés sur le rang **j** .

La précision obtenue dans ce cas devient excellente pour les trois paramètres, car chacun est déterminé par la totalité des points de la parcelle.

Cependant, la troisième version de l'algorithme suppose que l'on ait au préalable :

• ordonné les rangs selon les **bj,** croissants par exemple ;

• garanti l'absence de rangs non parcourus (rangs sautés) entre les rangs parcourus ;

• garanti l'absence de rangs parcourus plus d'une fois (rangs dédoublés).

Or, rien ne garantit dans le cas général les deux dernières conditions : il est même fréquent qu'une machine agricole saute des rangs, ne serait-ce que pour manoeuvrer plus facilement en bout de rang. C'est pourquoi nous proposons au paragraphe suivant un algorithme spécifique pour détecter les rangs sautés ou dédoublés. Une fois trouvés les bons numéros de rang, l'algorithme ci-dessus devient applicable.

Cas des rangs non rectilignes :

Une variante plus complexe des algorithmes précédents peut être de considérer des rangs **parallèles non rectilignes**, et avec des espacements réguliers ou non. Ce type de plantation peut se rencontrer parfois en terrain montagneux.

La figure 4a représente des rangs non rectilignes, parallèles, et irrégulièrement espacés.

La figure 4b représente des rangs non rectilignes, parallèles, et régulièrement espacés.

On peut par exemple modéliser chaque rang par un polynôme de degré supérieur à 1. Si on prend un degré 2, les rangs peuvent être des arcs d'ellipse, de cercle, de parabole, ce qui couvre déjà de nombreux cas. Avec des degrés supérieurs, presque toutes les formes sont possibles. La formulation mathématique est plus lourde, mais la démarche reste la même et l'algorithme reste applicable.

Le parallélisme entre deux rangs s'écrit en passant de l'équation d'un rang à celle du suivant par la substitution simultanée

de      Y      par Y - D1j
et de      X      par      X - D2j

où **(D1j, D2j)** est le vecteur de translation qui permet de passer du rang **j** au rang **j+1** (voir figure 4a).

L'espacement régulier s'écrit simplement en imposant que les **D1j** et **D2j** aient les mêmes valeurs pour toutes les valeurs de **j**. (Ils jouent un rôle analogue au **d** du troisième exemple précédemment considéré). Ce cas est illustré à la figure 4b.

On voit ainsi que la méthode présentée est très générale, puisqu'elle s'applique aussi bien :

• aux rangs rectilignes ;

• aux rangs parallèles, rectilignes ou non ;

• aux rangs parallèles et régulièrement espacés, rectilignes ou non.

## 2.5 - Ordonnancement des rangs.

Selon une autre disposition caractéristique de l'invention, on reconstitue dans la base de données l'ordre naturel des rangs, même si les rangs n'ont pas été parcourus dans cet ordre.

Pour cela, il suffit de classer les **bj** par valeurs croissantes. L'algorithme est calculé pour s'appliquer à tous les types de rangs parallèles qu'ils soient rectilignes ou non, régulièrement espacés ou non.

## 2.6 Détection des rangs sautés ou dédoublés :

Selon une autre disposition caractéristique de l'invention, l'algorithme de recalage détecte les rangs non parcourus situés entre les rangs parcourus.

D'autre part, l'algorithme de recalage regroupe les rangs parcourus plus d'une fois, en totalité ou en partie.

Cet algorithme est applicable aux rangs parallèles et régulièrement espacés. Il n'est présenté de façon détaillée que pour le cas de rangs rectilignes, mais il est extensible sur les mêmes principes pour le cas de rangs non rectilignes.

- On classe les **bj** par valeurs croissantes.

- On calcule les inter-rangs apparents (distance euclidienne entre axes des rangs **j** et **j+1**) : $r_j = (b_{j+1} - b_j)/\sqrt{(1 + a^2)}$

- On se donne un inter-rang **r** de référence. Il est soit déclaré par l'exploitant qui connaît son inter-rang, soit pris automatiquement égal à la moyenne pondérée des **rj.**

- On calcule les ratios **rj / r,** qui doivent être proches de 1 si les rangs sont différents et adjacents. On se donne une marge d'erreur relative **e,** qui respecte toujours la condition
  e < 0,5 ; on choisit par exemple        e = 0,25.

- Si **rj / r < e,** alors il y a dédoublement : on fusionne les deux rangs, qui correspondent à un seul rang réel parcouru deux fois ;

- Si **rj / r > 2 - e,** il y a au moins un rang sauté ; On arrondit alors **rj / r** à l'entier **k** le plus proche, et on détecte ainsi **k -1** rangs sautés.

- dans les autres cas, on considère que les rangs sont différents et adjacents.

Cet algorithme est très robuste, même si les inter-rangs déclarés sont connus sans grande précision (à 20 % près par exemple). Si il y a peu de rangs sautés consécutifs, il reconstitue la structure complète de rangs à coup sûr.

## 2.7 Organisation des données

Selon une autre disposition caractéristique de l'invention, on localise individuellement sur le rang chaque pied des plantes pérennes, et on lui associe la ou les donnée(s) enregistrée(s) par la machine lors de parcours successifs, ces parcours pouvant être associés à des actions culturales différentes ou effectués au cours d'années différentes.

On dispose à ce stade d'un fichier de points de mesure d'indice i, avec un point pour chaque donnée de localisation (obtenue par exemple toutes les secondes), ou pour chaque donnée capteur. Cela ne correspond pas nécessairement à un point par plante, car l'espacement des mesures dépend de la vitesse d'avancement de la machine. L'étape suivante nous permet de constituer un fichier de mesures organisé selon les plantes individuelles.

Les rangs corrigés obtenus par les algorithmes précédents sont déjà classés, par exemple par ordonnée à l'origine croissante si ils sont rectilignes (ou par abscisse croissante si les droites sont verticales).

On choisit comme origine de chaque rang le point d'extrémité du rang situé toujours à la même extrémité, le plus à gauche et le plus en bas par exemple. Enfin, on se donne un espacement moyen entre plantes sur le rang, déclaré par l'exploitant, et noté **p**.

Pour chaque point de mesure i du rang j, il est alors possible de trouver un entier **k** défini par:

$$k = \text{Arrondi}(1 + d(1,i) / p)$$

où

**d(1,i)**, désigne la distance du premier point du rang **j** au point de mesure **i** de ce même rang.

**k**, est le numéro sur le rang **j** de la plante à laquelle il faut rattacher la donnée **i.**

Si plusieurs données se rattachent à une même plante **(j,k)**, on en fait la somme si elles sont quantitatives (poids récolté par exemple), ou la moyenne si elles sont qualitatives (taux de sucre par exemple).

On observe enfin qu'une correction pour les retards de mesure est nécessaire : en fonction de la vitesse des convoyeurs de la machine, la quantité de récolte à mesurer est transportée pendant un délai **t** avant d'être mesurée. On conserve donc dans les données la date exacte de chaque mesure, et on affecte à chaque donnée mesurée la position que la machine avait **t** secondes plus tôt.

Le couple **(j,k)** permet de retrouver toute plante de la parcelle à coup sûr, à la seule condition que les parcours soient complets (tous les rangs parcourus), mais pas nécessairement parcourus dans l'ordre. Le même couple **(j, k)** sera trouvé pour une plante donnée, quelle que soit l'action culturale concernée sur une saison donnée, ou même d'une année à l'autre.

Application :

Selon une autre disposition caractéristique de l'invention, ce repérage absolu est utilisé pour effectuer des préconisations pour les actions culturales suivantes, localisées directement au niveau des plantes individuelles qui sont toutes pratiquées en viticulture, et dont la plupart existent aussi en arboriculture.

**taille d'hiver** : C'est la principale opération pour orienter la production de l'année suivante. Elle concerne les bois, et est réalisée manuellement pied par pied. Elle définit la structure de la plante pour la saison suivante. Par le choix du nombre de bourgeons fructifères, la charge fruitière future est contrôlée.

**taille en vert ou écimage** : elle s'effectue entre juin et août, et est largement mécanisée. Son but est d'éliminer l'excédent de masse végétale et de conserver un bon ensoleillement des zones fructifères.

**effeuillage** : plus localisée que l'opération précédente, l'effeuillage consiste à retirer les feuilles les plus proches des fruits, pour les aérer, améliorer leur ensoleillement, et éviter des pourritures. C'est une opération délicate à doser, et souvent manuelle.

**éclaircissage** : il s'agit de retirer au début de l'été une certaine proportion des fruits, pour permettre aux fruits restants de grossir mieux. Cette opération est manuelle.

### 2.8 Logiciel de cartographie

Lorsque le viticulteur ou arboriculteur revient chez lui, après les vendanges, il transfère les données localisées qu'il vient d'acquérir sur l'ordinateur de l'exploitation et fait tourner le logiciel de cartographie.
Ce type de logiciel existe déjà pour les cartographies de rendement sur céréales ; les principes de représentation sont repris, mais avec des caractéristiques différentes :

• en grandes cultures, les champs cartographiés ont une aire de plusieurs centaines d'hectares, alors qu'en cultures pérennes, des parcelles de 20 ha en France, ou de 50 ha à l'étranger, correspondent aux grandeurs maximum des surfaces plantées.

• En grandes cultures, le débat reste très ouvert sur le choix des échelles de saisie et de représentation, et aucune échelle « naturelle » n'existe. En cultures pérennes au contraire, nous avons choisi, selon une disposition caractéristique de l'invention, la résolution optimum par un raisonnement simple : elle ne peut être plus précise que la plante individuelle, car cela n'aurait pas de sens ; par ailleurs, nous avons vérifié que ce niveau de précision est atteint par les capteurs disponibles sur le marché, après recalage : la résolution choisie est donc d'environ un mètre sur le rang. Selon une disposition caractéristique de l'invention, la densité des mesures effectuées est égale à la densité des plantes individuelles, de sorte que l'on obtient une mesure par plante. Autrement dit, la résolution de saisie et de représentation des mesures correspond exactement à une mesure par plante.

Selon une autre disposition caractéristique de l'invention, on optimise la représentation des données en visualisant des espaces de séparation entre les rangs, et /ou entre les plantes individuelles.

• Aux échelles choisies (zones visualisées de 50 à 800 m de long), il est possible de visualiser les espaces libres entre rangs sans gêner la lisibilité. Cela aide le lecteur à reconnaître la parcelle et à situer des détails. Ce processus est illustré par le schéma de principe de la figure **5 a.**

• Aux échelles encore plus détaillées (zones visualisées de 3 m à 100 m de long), il est possible de visualiser les plantes individuelles. Ce processus est illustré par le schéma de principe de la figure 5 b, où la surface de chaque cercle est fonction de la valeur de la donnée localisée.

• Pour lisser les données, on peut choisir différents schémas de filtrage, mais ils sont tous caractérisés par une action préférentielle le long des rangs et non transversalement.

Selon une autre disposition caractéristique de l'invention, on conserve dans la base de données de cartographie l'historique de toutes les opérations culturales effectuées au niveau des plantes individuelles sur plusieurs années.

### Revendications

1. Procédé d'exploitation de données agricoles localisées pour optimiser la culture des plantes pérennes, **caractérisé en ce qu'**il comprend les étapes suivantes :

   ■ parcours d'une parcelle de plantes pérennes par un véhicule, ou par un piéton, avec production automatique de signaux de localisation en plusieurs points de la parcelle, au moyen d'un capteur de localisation absolue donnant la longitude, la latitude, et l'altitude, par exemple de type GPS différentiel, ce capteur étant embarqué sur ledit véhicule ou transporté par le piéton ;

■ mesure automatique au moyen de capteurs appropriés d'une ou plusieurs données agricoles en chacun de ces points, ces capteurs étant également embarqués sur ledit véhicule ou transportés par le piéton ;

■ enregistrement des signaux de localisation et desdites données mesurées en ces points par une unité de traitement d'information, embarquée sur ledit véhicule ou transportée par le piéton ;

■ traitement des signaux de localisation au moyen d'un ordinateur et d'un algorithme adapté pour améliorer la précision de localisation en exploitant la structure fixe des rangs de la parcelle, de façon à retrouver sans ambiguïté le même rang lors de différents parcours ;

■ représentation, en temps réel ou différé, des positions parcourues et/ou desdites données agricoles sous forme d'une carte élaborée par ordinateur.

2. Procédé selon la revendication 1, **caractérisé en ce qu'**il met en oeuvre un algorithme de traitement adapté pour localiser non seulement chaque rang, mais aussi chaque pied des plantes pérennes sur le rang, par le calcul de la distance parcourue depuis une extrémité du rang, et pour associer audit pied, la ou les donnée(s) enregistrée(s) lors de parcours successifs, ces parcours pouvant être associés à des actions culturales différentes ou effectués au cours d'années différentes.

3. Procédé selon la revendication 1, **caractérisé en ce qu'**il met en oeuvre un algorithme de traitement adapté pour améliorer les données de localisation en exploitant le caractère parallèle des rangs.

4. Procédé selon la revendication 1, **caractérisé en ce qu'**il met en oeuvre un algorithme de traitement adapté pour améliorer les données de localisation en exploitant le caractère parallèle et régulièrement espacé des rangs.

5. Procédé selon la revendication 1, **caractérisé en ce qu'**il met en oeuvre un algorithme de traitement adapté pour améliorer les données de localisation en exploitant le caractère rectiligne des rangs.

6. Procédé selon la revendication 1, **caractérisé en ce qu'**il met en oeuvre un algorithme de traitement adapté pour permettre la reconstitution, dans la base de données, de l'ordre naturel des rangs, même si les rangs n'ont pas été parcourus dans cet ordre.

7. Procédé selon la revendication 4, **caractérisé en ce que** l'algorithme de traitement est adapté et utilisé pour détecter les rangs non parcourus situés entre les rangs parcourus.

8. Procédé selon la revendication 1, **caractérisé en ce que** l'on détecte et enregistre, les débuts et les fins de rangs, au moyen d'un capteur approprié ou d'une saisie manuelle d'information.

9. Procédé selon la revendication 8, **caractérisé en ce que** l'on détecte les débuts et les fins de rang par le signal de mise en marche et arrêt des organes actifs de la machine agricole qui effectue le parcours.

10. Procédé selon la revendication 8, **caractérisé en ce que** l'on détecte les débuts et les fins de rang par un capteur de présence de la végétation, par exemple un capteur à ultra-sons.

11. Procédé selon la revendication 8, **caractérisé en ce que** l'on détecte les débuts et les fins de rang par des balises fixes placées aux extrémités des rangs.

12. Procédé selon la revendication 1, **caractérisé en ce que** les espaces de séparation entre rangs, et/ou entre les plantes individuelles, sont mis en évidence par la représentation des données.

13. Procédé selon la revendication 2, **caractérisé en ce que** les données localisées sont exploitées pour préconiser des actions localisées directement au niveau des plantes individuelles notamment taille d'hiver, taille en vert, effeuillage ou éclaircissage.

14. Procédé selon la revendication 2, **caractérisé en ce que** l'on conserve un enregistrement d'une ou plusieurs opérations culturales effectuées au niveau des plantes individuelles sur plusieurs années.

15. Procédé selon l'une des revendications 1 ou 2, appliqué à la vigne et à l'opération de vendange, **caractérisé en ce que** l'on mesure au moyen de capteurs appropriés et que l'on enregistre, pour chaque point, au moins deux types de données, l'une quantitative, liée au rendement de la récolte, l'autre qualitative, par exemple le taux de sucre ou l'acidité.

16. Procédé selon l'une des revendications 1 ou 2, **caractérisé en ce que** la densité des mesures opérées est égale à la densité des plantes individuelles, de sorte que l'on obtient une mesure par plante.

## Claims

1. A process for using localized agricultural data to optimize the cultivation of perennial plants, said process comprising :

   - passing through a parcel of perennial plants by a vehicle, or by a person on foot with automatically producing positioning signals at several points in the parcel during this passage, by means of an absolute positioning sensor showing its longitude, latitude, and altitude, for example, of the differential GPS type, this sensor being installed on board said vehicle or carried by the person on foot;

   - automatically measuring, by means of appropriate sensors, of one or more pieces of agricultural data at each of these points, these sensors also being installed on board said vehicle or carried by the person on foot;

   - recording the positioning signals and said data measured at these points by a data processing unit, installed on board said vehicle or carried by the person on foot ;

   - processing the positioning signals by means of a computer and an appropriate algorithm so as to improve positioning precision by using the fixed row structure in the parcel, so that the same row can be found again unambiguously during different passes ;

   - real-time or deferred representation of the positions passed through and/or said agricultural data in the form of a computer-generated map.

2. A process according to claim 1, **characterized in that** it implements a processing algorithm adapted for locating not only each row, but also each trunk of the perennial plants in the row, by calcutating the distance traveled from one end of the row and for associating with said trunk the datum or data recorded during successive passes, which passes can by associated with farming operations that are different or are performed during different years.

3. A process according to claim 1, **characterized in that** it implements a processing algorithm adapted for improving the positioning data using the parallel nature of the rows.

4. A process according to claim 1, **characterized in that** it implements a processing algorithm adapted for improving the positioning data using the parallel and evenly spaced nature of the rows.

5. A process according to claim 1, **characterized in that** it implements a processing algorithm adapted for improving the positioning data using the straight nature of the rows.

6. A process according to claim 1, **characterized in that** it implements a processing algorithm adapted for allowing the reconstruction in the data base of the natural order of the rows, even if the rows were not traveled in this order.

7. A process according to claim 4, **characterized in that** the processing algorithm is adapted and used for detecting the untraveled rows located between the traveled rows.

8. A process according to claim 1, **characterized in that** the beginnings and ends of the rows are detected and recorded by means of an appropriate sensor or a manual data entry.

9. A process according to claim 8, **characterized in that** the beginnings and ends of the rows are detected by the signal of the starting and stopping of the active elements of the farm machine performing the pass.

10. A process according to claim 8, **characterized in that** the beginnings and ends of the rows are detected by a sensor of the presence of vegetation, for exemple, an ultrasound sensor.

11. A process according to claim 8, **characterized in that** the beginnings and ends of the rows are detected by fixed markers placed at the ends of the rows.

12. A process according to claim 1, **characterized in that** the separating spaces between rows, and/or between the individual plants, are revealed by the representation of the data.

13. A process according to claim 2, **characterized in that** to localized data are used to recommend operations localized directly at the individual plant level, especially winter pruning, summer pruning, leaf trimming, or thinning.

14. A process according to claim 2, **characterized in that** a record of one or more farming operations performed at the individual plan level is maintained for several years.

15. A process according to claim 1 or to claim 2, applied to grape vines and to the grape harvesting operation, **characterized in that** at least two types of data, one quantitative, linked to the yield of the harvest, the other qualitative, for example, the sugar content or acidity, are measured by means of appropriate sensors and recorded for each point.

16. A process according to claim 1 or to claim 2, **characterized in that**, the density of the measurements performed is equal to the density of the individual plants, so that one measurement per plant is obtained.


**Patentansprüche**

1. Verfahren zur Nutzung örtlich festgelegter Landwirtschaftsdaten zur Optimierung des Anbaus von perennierenden Pflanzen, **dadurch gekennzeichnet, dass** es folgende Schritte umfaßt:

   • Durchlaufen einer Parzelle mit perennierenden Pflanzen mit einem Fahrzeug oder von einer Person zu Fuß, mit automatischer Erzeugung von Ortsbestimmungssignalen an mehreren Punkten der Parzelle mittels eines Sensors zur absoluten Ortsbestimmung, der die Länge, Breite und Höhe angibt, beispielsweise von der Art eines Differential-GPS, wobei sich dieser Sensor auf dem Fahrzeug befindet oder von der Person zu Fuß transportiert wird;

   • automatische Messung von einer oder mehreren Landwirtschafts-Datenangaben an jedem dieser Punkte mittels geeigneter Sensoren, wobei sich diese Sensoren ebenfalls auf dem Fahrzeug befinden oder von der Person zu Fuß transportiert werden;

   • Speicherung der Ortsbestimmungssignale und der Meßdaten an diesen Punkten durch eine Datenverarbeitungseinheit, die sich auf dem Fahrzeug befindet oder von der Person zu Fuß transportiert wird;

   • Verarbeitung der Ortsbestimmungssignale mittels eines Computers und eines angepaßten Algorithmus zur Verbesserung der Präzision der Ortsangabe, indem die feste Reihenstruktur der Parzelle so ausgewertet wird, dass die gleiche Reihe auch beim Durchlaufen unterschiedlicher Strecken eindeutig wiedergefunden wird;

   • Darstellung der durchlaufenen Positionen und/oder der Landwirtschaftsdaten in Echtzeit oder versetzter Zeit in Form einer vom Computer ausgearbeiteten Karte.

2. Verfahren nach Anspruch 1, **dadurch gekennzeichnet, dass** es einen Verarbeitungsalgorithmus verwendet, der angepaßt wurde, um nicht nur die Position jeder Reihe, sondern auch jeder einzelnen der perennierenden Pflanzen in der Reihe durch die Berechnung der durchlaufenen Entfernung von einem Ende der Reihe aus zu bestimmen, und um mit der Pflanze die Daten zu verknüpfen, die während der aufeinanderfolgenden Durchgänge gespeichert wurden, wobei diese Durchgänge mit unterschiedlichen Anbautätigkeiten verbunden oder im Laufe verschiedener Jahre ausgeführt worden sein können.

3. Verfahren nach Anspruch 1, **dadurch gekennzeichnet, dass** es einen Verarbeitungsalgorithmus verwendet, der angepaßt wurde, um die Ortsbestimmungsdaten zu optimieren, indem das Merkmal der Parallelität der Reihen ausgewertet wird.

4. Verfahren nach Anspruch 1, **dadurch gekennzeichnet, dass** es einen Verarbeitungsalgorithmus verwendet, der angepaßt wurde, um die Ortsbestimmungsdaten zu optimieren, indem das Merkmal der Parallelität und der gleichmäßigen Beabstandung der Reihen ausgewertet wird.

5. Verfahren nach Anspruch 1, **dadurch gekennzeichnet, dass** es einen Verarbeitungsalgorithmus verwendet, der angepaßt wurde, um die Ortsbestimmungsdaten zu optimieren, indem das Merkmal der Geradlinigkeit der Reihen ausgewertet wird.

6. Verfahren nach Anspruch 1, **dadurch gekennzeichnet, dass** es einen Verarbeitungsalgorithmus verwendet, der angepaßt wurde, um in der Datenbank die Nachbildung der natürlichen Abfolge der Reihen zu ermöglichen, selbst wenn die Reihen nicht in dieser Reihenfolge durchlaufen wurden.

7. Verfahren nach Anspruch 4, **dadurch gekennzeichnet, dass** der Verarbeitungsalgorithmus angepaßt und verwendet wird, um die nicht durchlaufenen Reihen zu erfassen, die sich zwischen den durchlaufenen Reihen befinden.

8. Verfahren nach Anspruch 1, **dadurch gekennzeichnet, dass** der Anfang und das Ende der Reihen mittels eines geeigneten Sensors oder durch manuelle Dateneingabe erfaßt und gespeichert werden.

9. Verfahren nach Anspruch 8, **dadurch gekennzeichnet, dass** der Anfang und das Ende der Reihen durch das Signal zur Inbetriebnahme und zum Ausschalten der aktiven Organe der Landwirtschaftsmaschine erfaßt werden, die den Durchlauf

**11**

ausführt.

**10.** Verfahren nach Anspruch 8, **dadurch gekennzeichnet, dass** der Anfang und das Ende der Reihen durch einen Sensor für die Anwesenheit von Pflanzenwuchs erfaßt werden, beispielsweise durch einen Ultraschallsensor.

**11.** Verfahren nach Anspruch 8, **dadurch gekennzeichnet, dass** der Anfang und das Ende der Reihen durch feste Markierungen erfaßt werden, die an den jeweiligen Enden jeder Reihe positioniert sind.

**12.** Verfahren nach Anspruch 1, **dadurch gekennzeichnet, dass** die Trennabstände zwischen den Reihen und/oder zwischen den einzelnen Pflanzen durch die Darstellung der Daten deutlich erkennbar sind.

**13.** Verfahren nach Anspruch 2, **dadurch gekennzeichnet, dass** die Ortbestimmungsdaten ausgewertet werden, um örtlich begrenzte Tätigkeiten direkt auf der Ebene der einzelnen Pflanzen zu empfehlen, insbesondere Winterschnitt, Sommerschnitt, Abblatten oder Verziehen.

**14.** Verfahren nach Anspruch 2, **dadurch gekennzeichnet, dass** eine Speicherung von Daten über eine oder mehrere ausgeführte Anbautätigkeiten auf der Ebene einzelner Pflanzen über mehrere Jahre archiviert wird.

**15.** Verfahren nach einem der Ansprüche 1 oder 2, angewendet auf Rebstöcke und den Weinlesevorgang, **dadurch gekennzeichnet, dass** für jeden Punkt mindestens zwei Arten von Daten mittels geeigneter Sensoren gemessen und gespeichert werden, zum einen quantitative Daten, die mit dem Ernteertrag verknüpft sind, und zum anderen qualitative Daten, beispielsweise der Zucker- oder Säureanteil.

**16.** Verfahren nach einem der Ansprüche 1 oder 2, **dadurch gekennzeichnet, dass** die Dichte der abgenommenen Messungen gleich der Dichte der einzelnen Pflanzen ist, so dass pro Pflanze eine Messung erhalten wird.

DGPS

Transfert des données

Ordinateur
de bord :
saisie

Ordinateur
à la ferme :
cartographie

1 an

Capteurs machine :
rendement, sucre,
acidité,...

Actions culturales
modulées :
fertilisation,
taille,...

**<u>Figure 1</u>**

**Figure 2a**

**Figure 2b**

**Figure 3**

Figure 4a

Figure 4b

Fig.5b

Fig.5a